(19) **Europäisches Patentamt European Patent Office Office européen des brevets**

(11) **EP 3 109 573 B1**

(12) **EUROPEAN PATENT SPECIFICATION**

(45) Date of publication and mention of the grant of the patent:
**09.09.2020   Bulletin 2020/37**

(51) Int Cl.:
***F25B 49/00*** *(2006.01)*

(21) Application number: **15173519.8**

(22) Date of filing: **24.06.2015**

(54) **COMPONENTS CROSS-MAPPING IN A REFRIGERATION SYSTEM**

KOMPONENTEN-CROSS-MAPPING IN EINEM KÜHLSYSTEM

CARTOGRAPHIE CROISÉE DE COMPOSANTS DANS UN SYSTÈME DE RÉFRIGÉRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2016   Bulletin 2016/52**

(73) Proprietor: **Emerson Climate Technologies GmbH 13507 Berlin (DE)**

(72) Inventors:
• **BERTAGNOLIO, Stephane 4840 Welkenraedt (BE)**

• **WINANDY, Eric 4840 Welkenraedt (BE)**
• **STEILS, Raymond 4840 Welkenraedt (BE)**
• **ZHAO, Haibin 4840 Welkenraedt (BE)**

(74) Representative: **Hohgardt, Martin Bardehle Pagenberg Partnerschaft mbB Patentanwälte, Rechtsanwälte Breite Straße 27 40213 Düsseldorf (DE)**

(56) References cited:
**EP-A2- 1 965 158     WO-A1-2008/100255**

**Description**

This invention relates in general to performance predicting, control, fault detection and diagnostic of refrigeration systems, and in particular to the use and the calibration of system performance models for such purpose.

Since the maintenance and the operation of refrigeration systems is quite expensive, there exists the aim of continuously monitoring and improving the reliability and the efficiency of refrigeration systems. Mechanical refrigeration systems that contain at least one compressor consume high amounts of energy during operation, and are subject to a number of highly volatile parameters which influence the reliability, the efficiency and capacity of the refrigeration system. Therefore, it is important to continuously monitor and control the performance of refrigeration systems.

In the prior art, a great variety of different ways are known how the operation of refrigeration circuits containing at least one compressor can be monitored and controlled starting from simply comparing sensed system values among them or to predetermined thresholds values, up to more sophisticated model-based methods using transfer functions to express the system's input/output relationship.

Fault detection and diagnosis of refrigeration systems is commonly handled by monitoring system's components operating parameters and following their evolution in time, where a component could be any component that is comprised within the system such as, for example, a compressor, or an expansion valve, etc. In addition to traditional fault detection methods as disclosed in EP 0 217 558 B1, methods based on performance prediction of refrigeration system components can be used. For example, US 6,799,951 B2 describes a compressor fault or failure detection method based on the use of a predetermined compressor dataset such as performance rating curves to predict the value of a compressor operating parameter and compare it to an actual sensed value. Also, US 6,981,384 B2 illustrates the use of a pre-programmed controller dedicated to detect non-adapted charge, i.e. system under-charge or over-charge, of refrigerant in a given system condition based on the comparison between the measured liquid sub-cooling and a pre-determined sub-cooling value defined as function of the operating mode and the characteristics of the system. Also, US 2005/0126190 A1 discloses a similar method based on suction superheat monitoring. EP 0 883 047 B1 shows a method dedicated to Electrical Expansion Valve, EEV, operation monitoring based on neural network theory. The aim of this method is to generate an algorithm based on the information generated by a plurality of sensors located in the system and to produce a computed value of the EEV position. As compared to other methods that are known in the prior art, this method does not rely on pre-determined parameters but has a very limited scope. The EEV control method described in US 2013/0205815 A1 is based on transfer function theory and does neither rely on pre-determined parameters. However, application of such a method is computationally demanding and of limited scope as well.

Among others, monitoring and controlling the performance of refrigeration systems also includes to measure the efficiency of the system and to compute performance indexes like Coefficient of Performance, COP, or Energy Efficiency Ratio, EER, for fault detection purposes, e.g. to identify potential efficiency degradation of the system or to check if the system is performing within its manufacturer's specifications, or performance monitoring purposes, e.g. to estimate operating costs and allow the owner to make decision about use and operation of its installation. However, measuring the efficiency of refrigeration systems is generally challenging, e.g. because there are multiple parameters to monitor, costly, e.g. because there are numerous sensors and loggers needed and, somehow, poorly accurate, especially for air systems. For example, US 6,701,725 B2 describes the use of a widely known compressor performance model to estimate the capacity and the power of an actual refrigeration system based on published generalized, or default/standard compressors performance data, e.g. ARI Standard 540 or compressor manufacturer's tables, in order to draw conclusions about the performance of the actual refrigeration system, e.g. capacity, power, COP, EER, seasonal performance, etc. US 8,775,123 B2 shows another simple method to estimate the coefficient of performance of a refrigeration system based only on enthalpy calculations and limited sensing of system parameters.

For controlling the operation of refrigeration circuits, the Electronic Expansion Valve, EXV, control is commonly handled based on standard closed-loop control algorithms, e.g. PI or PID control, intending to maintain a sufficient amount of superheat at compressor(s) suction in order to avoid excessive amount of liquid entering the compressor(s) that could cause failure of the compressor(s). Many methods exist to improve the robustness and the accuracy of superheat control, such as auto-tuning or adaptive-tuning methods as explained in US 5,506,768 A, whereas WO2008/147828 A discloses another type of control based on the use of fuzzy logic method. However, these control methods generally do not allow operating with a compressor suction superheat of less than 5K to 7K, leading to suboptimal operation of the evaporator, and so, of the refrigeration system. It is well known that, controlling more accurately the superheat allowing operation at low, i.e. positive, or zero superheat, i.e. typically, 3K to 0K, would lead to higher system efficiency. Moreover, as explained in US 4,878,355 A it is also well known that operating with limited amount of liquid droplets at the suction of the compressor may be beneficial to cool down the compressor and to extend its nominal operating range/envelope. However, such an operation, close to system reliability limits, requires high levels of accuracy and robustness that traditional control methods cannot provide. Therefore, EP 0 237 822 B1 describes a method to control the expansion valve opening based on the measurement of compressor discharge superheat and its comparison to predetermined degree of superheat estimated based on a relationship between compressor suction and discharge superheat values. WO 2009/048466 A1 shows a similar approach also based on the use of a relationship between compressor suction superheat and discharge temperature. US 6,318,101 B1 describes a control method targeting evaporator pinch minimization and monitoring the discharge temperature deviation versus a predetermined setpoint that is stored in the controller to protect the compressor from liquid slugging. US 7,509,817 B1 shows a linear expansion valve control method based on suction and discharge superheat measurement and characterized by the successive use of two different control methods making use of predetermined parameters representative of compressor(s) capacity(ies) and applied after a predetermined period of time. US 6,711,911 B1 discloses another expansion valve control method based on the comparison of the actual (sensed) compressor discharge temperature and a theoretical value of the compressor discharge temperature that would correspond to a desired low-superheat operation. The calculation of the theoretical discharge temperature is based on some pre-determined coefficients/parameters characterizing the compressors in use in the refrigeration system. US 8,096,141 B2 shows another method of controlling superheat operation of refrigeration systems relying on estimating the actual suction flow rate (based on some known or pre-determined characteristics of the valve) and adapting to the expansion valve opening to match a calculated desired suction flow rate set point, corresponding to a desired suction condition set point. US 7,290,402 B1 shows an expansion valve control method based on an experimentally predetermined relationship between suction superheat error and valve opening. Pre-determined lookup tables are also used in US 2013/0174591 A1 to establish a superheat set point based on current operating conditions of the system.

WO2008/100255 discloses a method of comparing a sensed saturated discharge temperature (SDTi) to a calculated desired saturated discharge temperature (SDTSP); wherein said SDTSP is calculated based on various measured operational parameters.

As shown above, most of the monitoring, control and diagnostic methods described in the literature generally make use of nominal characteristics, predetermined relationships and/or reference standardized rating performance. Such data is usually generated based on the performance of one given system or component, at one given time. It is obvious that such pre-determined data cannot be considered as an accurate representation of the behavior of any, even similar, system or component since it does not take into account the effects caused by system's components manufacturing tolerances, break-in, ageing and application or system tolerances. However, for accurate monitoring, control, fault detection and diagnostic of the refrigeration system, it is essential to better adjust the applied performance prediction model during operation to account for components performance variability and variations.

Manufacturing variability of refrigeration system components may significantly impact components performance. Manufacturing tolerances vary from one component to another and from one manufacturer to another. Values of these tolerances and variability ranges are most of the time not available in the public domain and are part of the exclusive know-how of the component manufacturer.

A break-in effect is generally observed during the first hours of operation of a system component, wherein the break-in can be defined as the period of time until the system's components have reached stable performance level. Depending on the various parameters, such as the type of component, the technology, the size, the operating conditions, etc., the break-in may last for a couple of hours up to a few days. Break-in parameters, such as duration, are generally not available in the public domain and require a significant amount of test data to be identified. Then, these characteristics are also generally not available or are part of the exclusive know-how of the component manufacturer.

Components ageing consist in the evolution generally degradation of components operating performance with time. Such ageing and the resulting performance variation range may depend of many factors such as the time of use, the operating conditions, and the type of component used.

Usually, significant impact of ageing may occur after a relatively long running period. Indeed, most of system components are designed to meet life expectancy requirements of several years. Once again, accurate characterization of components ageing generally requires significant amount of data and very detailed knowledge of components behavior.

Methods where the effect of manufacturing tolerances, break-in and ageing of main component can be precisely characterized, anticipated and corrected offer new opportunities for more accurate performance and operation prediction, monitoring, control and fault detection. Indeed, as an example, the prior-knowledge of these tolerances allows more realistic definition of control and detection bands as well as more robust adjustment of control and detection algorithms.

Application or system tolerances may also have a certain impact on system performance and operation. Application tolerances include all the aspects that may vary between one system using a defined set of components and another system using the exact same set of components. This may include refrigeration circuit arrangement and related pressure drops, as well as quantity of oil and refrigerant in the system, presence of insulation on the components, presence of sound insulation cover on the compressor, etc. However, some of these influences are generally of smaller influence and may be easily compensated/corrected or taken into account if sufficient amount of sensors is used, e.g. pressure drops between two components.

Also, it is important to notice that current methods are often sub-optimal since they do not intend to characterize the system as a whole but, generally, consider system components individually, such as compressors, valves, etc., rarely leveraging on the close dynamic coupling existing among the components of a given refrigeration system.

Therefore, there is a need for efficient techniques to enhance the accuracy and the robustness of prediction models to be used for performance predicting, control, diagnostic and fault detection of refrigeration systems.

This need is fulfilled by the subject-matter of the independent claims.

According to the invention, a method according to independent claim 1 and an apparatus according to independent claim 10 are disclosed.

In the following part of the description, the term flow refers to a mass flow.

The refrigeration system which contains at least one compressor and at least one expansion valve consists in a closed-loop refrigeration circuit in which a refrigerant fluid flows and where the at least one compressor is dedicated to compress the refrigerant. As described above, the refrigeration circuit contains at least one compressor. However, depending on the application, the refrigeration circuit may also contain multiple identical or different, fixed capacity or variable capacity compressors.

Such a circuit may also contain a condenser which receives hot refrigerant gas from the compressor, wherein the gas is condensed in the condenser, and then fed through at least one expansion valve to the evaporator. By means of the expansion valve, the refrigerant flow into the evaporator can be controlled. The expansion valve used in the refrigeration circuit can be an electronic expansion valve, EXV, where a step motor is used to control the valve opening, and thereby controls the flow of refrigerant entering the evaporator. For example, the step motor can control the flow in response to signals received by an electronic controller.

The first performance model of the refrigeration circuit can be any model capable of modeling the behavior of the refrigeration circuit such as a black-box regression-type model, a white-box deterministic model that relies on physical relationships or a grey-box model that uses both approaches. Also, the second performance model can be any model capable of modeling the behavior of the refrigeration circuit such as described above with regards to the first performance model.

For example, a black-box regression-type model suitable for modeling the performance of the refrigeration system is defined in EN 12900/AHRI540 which can be used to directly compute compressor performance, such as typical power consumption, suction flow, current and capacity, based on compressor operating values such as the various pressure and temperature values that are sensed by means of sensors arranged in various locations of the circuit. Grey-box models that would be suitable for modeling the performance of the refrigeration system rely on the definition of standard efficiency indexes, such as compressor isentropic efficiency, electronic expansion valve characteristic factor, and the use of simple regressions to estimate the value of such indexes as function of the operating condition of the system, e.g. pressures and temperatures and components operating status, e.g. compressor speed, valve motor position. Parameters of these models may generally be identified for a given type of system/component and can be re-used to estimate the performance of similar equipment.

More sophisticated regression models are also suitable for modeling the performance of the refrigeration system and its components. These kinds of models employ a generalized notion of transfer functions to express the relationship between the input, the output and the noise in the circuit based on measured values from the circuit. Practice shows that AutoRegressive models with or without external input, e.g. like ARMA, ARX, ARMAX are specifically suitable for modelling the behavior of refrigeration systems containing at least one compressor, because these kinds of models can be easily adjusted, i.e. calibrated, or re-calibrated to fit real data and which further allows accurate dynamic prediction of considered circuit performance.

For using such a performance model as described above, one or more circuit parameter values of the refrigeration circuit are measured. The measuring can be done by reading in, i.e. sampling, values from at least one of the several of the temperature and pressure sensors that are dispersed throughout the refrigeration circuit. For example, sensors can be arranged on or in the compressor, the tubes, the expansion valve, etc. Also, values other than temperature and pressure values can be used instead or in addition to the above referenced circuit parameter values such as the compressor supply power, etc. The circuit parameter values can be periodically measured and then, for example, stored in a memory that is connected to the refrigeration circuit.

Advantageously, it has been shown that by interconnecting a first and a second performance model as described above allows to predict the performance and the behavior of the considered refrigeration system in operation with a better accuracy and robustness than standard pre-determined and components-specific reference models. This scheme can be referred to as cross-mapping and can be used for predicting performance, monitoring, system control and failure detection purposes.

It has been found that the discharge line temperature and the suction flow of the at least one compressor serve as very reliable indicators for performance monitoring, system control and failure detection purposes. In particular, any deviation of the flow in the actual circuit versus the performance model will affect the discharge line temperature, DLT, significantly.

Therefore, in the method according to the invention, the discharge line temperature, $T_{pm}$, of the circuit is calculated with the first performance model as a function of at least one circuit parameter value of the one or more measured circuit parameter values from the refrigeration circuit. According to the invention, the discharge line temper-

ature, $T_{pm}$, is be calculated as a function of one or more of the following circuit parameter values: a number of compressors, N, running in the circuit, a suction pressure, $P_1$, a discharge pressure, P2, and a suction temperature, $T_1$, from the refrigeration circuit.

As an example, the discharge line temperature can be expressed as function of the same circuit parameters values by calculating an energy balance of the compressor and the system based on pre-determined compressor performance data, for example: EN12900/AHRI550 data.

In another example, the discharge line temperature can also be expressed by using a MISO, Multi-Input-Single-Output, equation structure as follows:

$$Tpm_t = a_1 {}^*Tmeas_{t-1} + a_2 {}^*Tmeas_{t-2} + a_3 {}^*Tmeas_{t-3} + ...$$

$$...b1 {}^*P1_t + b_2 {}^* P1_{t-1} + b_3 {}^* P1_{t-2} + c_1 {}^*P2_t + c_2 {}^* P2_{t-1} + c_3 {}^* P2_{t-2} + d1 {}^*T1_t + d_2 {}^* T1_{t-1} + d_3 {}^* T1_{t-2}$$

In one embodiment, all mentioned circuit parameter values are used for the calculation. According to the invention, a first differential value, $\Delta T$, i.e. a relative value that defines the difference of two absolute values, is be calculated by comparing the calculated discharge line temperature, $T_{pm}$ to a measured discharge line temperature, $T_{meas}$, from the refrigeration circuit.

Advantageously, the accuracy and the robustness of the mapping are further increased by calculating a first flow, $M_{pm}$, with the first performance model as a function of at least one measured circuit parameter value of the one or more measured circuit parameter values. According to the inventione, the first flow, $M_{pm}$, is calculated as a function of N, $P_1$, $P_2$, and $T_1$ from the refrigeration circuit with the first performance model. The obtained value is then compared to a second flow, $M_{evm}$, through the expansion valve for calculating a second differential value, $\Delta M$.

The second flow, $M_{evm}$, through the expansion valve can be calculated by means of a second performance model for the expansion valve model as a function of at least one of the one or more measured circuit parameter values.

According to the invention, the The-second flow, $M_{evm}$, i.e. the flow through the expansion valve is calculated with a regression-type model, where the characteristic equation for the expansion valve can be expressed as a relationship between valve flow, valve opening and system operating conditions. For example, a relationship like $\dot{m} = F(P_1, P_2, \varphi(\%), T_3)$ can be used, where $\dot{m}$ is the mass flow through the expansion valve, $P_1$ is the suction pressure, $P_2$ is the high pressure of the system (representative of the valve inlet pressure), $T_3$ is the liquid temperature, and $\varphi(\%)$ is the valve opening in degree. However, such relationship could also be of an Auto-regressive form.

The first differential value, $\Delta T$, and the second differential value, $\Delta M$, are then evaluated, where evaluating could be, for example, an analysis or determination whether the first and second differential values $\Delta T$, $\Delta M$, are still within a certain predetermined range of their respective threshold values. The evaluation results can be used for the various applications as defined in the embodiments described below.

In one embodiment, it is indicated that at least the first performance model is ready to be used for predicting performance of the refrigeration circuit based on determining that at least one of the measured discharge line temperature, $T_{meas}$, and the first differential value, $\Delta T$, remains stable. Here, stable can be defined as the time derivative of the temperature value or of the temperature differential value being close to 0, for example an order of magnitude 1E-3 to 1E-6 which means that the measured discharge line temperature, $T_{meas}$, does not vary more than, for example, 0.5° Kelvin over the entire operation period.

During the first hours of operation of the refrigeration circuit, break-in effects have a major impact on circuit performance and behavior. Here, break-in refers to the period of time that is needed until all the measured values remain within their normal operational limits, i.e. until the system has reached stable operation. For example, it might take up to 24 hours until the measured discharge line temperature $T_{meas}$ remains within a certain, i.e. normal, range during normal operation. Even though compressor performance can be already predicted for monitoring, control or fault detection purposes before break-in is done, the prediction accuracy after break-in is drastically increased.

If after the initial period of operation time, stable operation is achieved, an indication can be generated to let a system operator, or a control software running in an electronic controller know that the system break-in can now be considered as ended and that at least the first performance model can now be used for predicting the performance of the refrigeration circuit. The indication can be a signal that is sent to an electronic controller, and/or a flag that is set in a control software running in the electronic controller, etc.

In one embodiment, the first performance model is calibrated in response to the indication that the first performance model is ready to be used for predicting performance.

It is known that regression and polynomial models need to be calibrated and re-calibrated to be sufficiently precise for performance prediction, fault detection, control etc. In the description, the term calibrated is used for both, the initial calibration and the subsequent calibration(s), i.e. re-calibration(s).

As described above with regards to the previous embodiment, it might take up to 24 hours until the system has reached a stable performance level. During that initial period of operation time, the model could be used for monitoring, control or fault detection purposes as described above. However, the prediction might not be very accurate. Therefore, after the system has reached stable operation, the first performance model can be calibrated for the first time to account for possible deviations due to inaccuracy of the first performance model, because of components manufacturing variability and application variability.

Calibrating the first performance model could be done by adjusting the parameters of the first performance model so that at least one of the two values $\Delta T$, $\Delta M$ tends towards zero. Also, the calibration could be an iterative process which is done for reducing $\Delta T$, $\Delta M$ errors.

In another embodiment, the evaluating comprises determining whether to calibrate the first performance model based on at least one of the two differential values, $\Delta T$, $\Delta M$. This determining can be done, for example, periodically after the first performance model was initially calibrated in response to the indication that the first performance model is ready to be used for predicting performance. However, this determining can be also done independently from an indication that the first performance model is ready to be used for predicting performance and/or independently from a first calibration. For example, determining could be done in predetermined time intervals after the refrigeration circuit was taken in operation.

Advantageously, for determining whether the calibrated first performance model is still in accordance with the actual performance of the refrigeration circuit, it has been found that the discharge line temperature and the suction flow of the at least one compressor serve as very reliable indicators. Deviation between actual measured $T_{meas}$ and calculated $T_{pm}$, and hence an increase in the absolute value of the first differential value $\Delta T$ is monitored. If the deviation is increasing with time, without overpassing a pre-determined evolution rate, deviation is considered to be due to "normal ageing". Then, a new calibration of the first performance model is needed. This could be done by updating the first performance model with recently measured values from the refrigeration system as described above. If not, deviation could be due to a failure in the system, e.g. a faulty compressor, and a fault detection method could be activated. For example, calibrating the performance model could be necessary after the performance model was initially calibrated, if the two values that form the differential value $\Delta T$ would differ by more than 5%. The same threshold could also apply for $\Delta M$. Advantageously, to further increase the prediction accuracy, a deviation of the other differential value $\Delta M$ can be taken into account in addition to, or alternatively to $\Delta T$ in deciding whether to calibrate the first performance model.

In one embodiment, a sensor fault is indicated based on determining that the first differential value, $\Delta T$, is outside a predetermined range, and/or an expansion valve fault is indicated based on determining that the first and second flow values, $M_{pm}$, $M_{evm}$, used to obtain the second differential value, $\Delta M$, differ by a predetermined percentage from each other. For example, this predetermined range could be a range of 0 to 20° Kelvin, i.e. the magnitude of the difference of $T_{pm}$ and $T_{meas}$ is between 0° and 20° Kelvin. Also, for example, the magnitude of the difference of $M_{pm}$ and $M_{evm}$, might differ by more than 20% from each other to indicate an expansion valve fault. For example, those determinations can be done periodically after the refrigeration circuit was started. It has been shown that when the first and second differential values are outside their respective ranges, as described above, at least one of the sensors that is adapted to measure the at least one circuit parameter value is most likely faulty. The determining whether a sensor fault and/or an expansion valve fault has occurred can be done right after the refrigeration circuit is started, or can be done periodically after the first performance model was initially calibrated to achieve a higher degree of accuracy.

In another embodiment, the evaluating comprises determining the presence of a fault based on at least one of the two differential values, $\Delta T$, $\Delta M$. Here, the presence of a fault can be determined if the two values that form the differential value $\Delta T$ would differ by more than 10%. The same or a similar threshold could also apply for $\Delta M$. For increased accuracy, the evaluating could be done with a calibrated first performance model. Nevertheless, the evaluating would already give useful results when just using a non-calibrated performance model.

Also, possible faults could be better localized by a more detailed analysis of the differential values, $\Delta T$, $\Delta M$ for example by analyzing the second differential value, $\Delta M$. Here, it could be checked whether the second differential value, $\Delta M$, is positive or negative. For example, if the flow, $M_{evm}$, through the expansion value which can be calculated by means of a regression-type model as described above, differs from the flow, $M_{pm}$, which is calculated by means of the first performance model, it is highly likely that a fault in the expansion valve is detected. In contrast to a fault in "the expansion valve side", a different type of fault could be detected, if the first flow, $M_{pm}$, which is calculated from the model differs from the calculated second flow, $M_{evm}$, through the expansion valve. In this case, a compressor fault might have appeared or there might be a problem with the commissioning of the performance model.

In one embodiment, a power consumption, $I_{pm}$, of the at least one compressor is calculated with the first performance model as a function of at least one of the one or more measured circuit parameter values and the calculated power consumption, $I_{pm}$, is compared to a measured power consumption, $I_{meas}$, from the refrigeration circuit to obtain a third differential value, $\Delta I$, and evaluating the third differential value, $\Delta I$. Here, evaluating could be an analysis or determination whether the third differential value $\Delta I$ is still within a certain predetermined range of its respective threshold value. The evaluation result can be also used for the various applications as defined in the embodiments described above. In the description, the term power is used interchangeably for electrical power in Watts and for the electrical current in Amperes.

The power consumption, $I_{pm}$, can be calculated as a function of at least one of the one or more measured circuit parameter values. In one example, the power consumption could be calculated from the first performance model, as a function of the suction pressure P1, the discharge pressure, P2, and a compressor speed, $\omega$. The measured power consumption value, $I_{meas}$, can be obtained by means of a current sensor installed in the electric main line, supplying the at least one compressor in the refrigeration circuit with electric energy.

Advantageously, the presence of a system fault, sensor fault or expansion valve fault could be also determined if the third differential value, $\Delta I$, is outside a respective predetermined range which can vary depending on the type of fault. Also, advantageously, the break-in period, as described above, can be characterized directly by tracking the evolution of the compressor's power intake. Further, by taking the power consumption into consideration, higher accuracy levels can be reached, because compressor losses can be directly estimated by comparing power measurement and refrigerant-side compression work. This allows identifying a relationship between compressor losses. Also, to further increase the prediction accuracy whether or not the first performance model needs to be calibrated, or re-calibrated the third differential value can be taken in account in addition to, or alternatively to $\Delta T$ and/or $\Delta M$.

In yet another embodiment, a further discharge line temperature, $T'_{pm}$, is calculated with the first performance model as a function of at least one or more ideal circuit parameter values of a desired operating condition and the calculated further discharge line temperature, $T'_{pm}$, is compared to the measured discharge line temperature, $T_{meas}$, from the refrigeration circuit to obtain a further first differential value, $\Delta T'$, a further first flow, $M'_{pm}$, is calculated with the first performance model as a function of at least one or more ideal circuit parameter values of the desired operating condition, a further second flow, $M'_{evm}$, is calculated through the expansion valve with the second performance model for the expansion valve as a function of at least one or more ideal circuit parameter values of the desired operating condition, the further first flow, $M'_{pm}$, is compared to the further second flow, $M'_{evm}$, to obtain a further second differential value, $\Delta M'$, and the opening of the expansion valve is adjusted based on one of at least the further first differential value, $\Delta T'$, and the further second differential value, $\Delta M'$.

Advantageously, a target expansion valve opening can be estimated based on the cross-mapping. Here, ideal circuit parameter values of a desired operating condition, which could be expressed with known circuit parameter values that correspond to the desired operating condition, can be used to deduce the target expansion valve opening by means of the cross-mapping relationship linking compressor suction flow, valve opening and operating conditions.

Therefore, at a given operating condition, performance model cross-mapping allows to determine the actual compressor and expansion operating conditions and to compare them with desired compressor and valve operating conditions.

For example, the desired operating condition could be a desired superheat condition. Here, if the actual suction state, for example, the enthalpy or the temperature, is higher than a target suction state, for example, enthalpy or temperature, the expansion valve opening can be increased to increase compressor suction flow. If the actual suction state is lower than the target suction state, the expansion valve opening can be reduced to limit compressor suction flow. This method allows robust operation in positive high, for example more than 3° Kelvin or low, for example less than 3° Kelvin superheat operation, but also in slightly floodback operation. Here, the term floodback refers to the condition when liquid refrigerant droplets returns to the inlet of the running compressor.

Therefore, a floodback rate which can be used to refer to the refrigerant quality/state at the compressor inlet can be estimated and kept under control. Advantageously, the system can be controlled to reach a desired compressor discharge state. In this case, similar methods can be reversed to achieve this target.

However, the desired operating condition could be also a desired discharge condition. If this is the case, the system can be controlled to reach the desired discharge condition.

In another embodiment, a further power consumption, $I'_{pm}$, of the at least one compressor is calculated with the first performance model as a function of at least one or more ideal circuit parameter values of the desired operating condition and the further calculated power consumption, $I'_{pm}$, is compared to the measured power consumption, $I_{meas}$, from the refrigeration circuit to obtain a further third differential value, $\Delta I'$, and the opening of the expansion valve is adjusted based on the further third differential value, $\Delta I'$.

Advantageously, the apparatus could be a controlling device, or controller, or part of a controller. Also, the controller could be further adapted, i.e. in addition to verifying the accuracy of the first performance model, to also monitor the refrigeration circuit using the first performance model, and, thus, for detecting possible faults in the refrigeration circuit.

According to the invention, a method for detecting a present operational mode of a number of N compressors installed in a refrigeration circuit containing at least an expansion valve, and the number of N compressors, comprising: measuring one or more circuit parameter values of the refrigeration circuit, calculating for at least one of the possible operational modes, x, of the N compressors the respective suction flow value, $M_{pm}[1 \ldots x]$, with a first performance model as a function of at least one of the one or more measured circuit parameter values, calculating a present flow value, $M_{evm}$, through the expansion valve with a second performance model as a function of at least one of the one or more measured circuit parameter values, and comparing the at least one calculated suction flow value, $M_{pm}[1 \ldots x]$, to the present flow value, $M_{evm}$, to detect the present operational mode, if the values for the calculated suction flow value,

$M_{pm}[1 ... x]$, and the present flow value, $M_{evm}$, are substantially equal.

The refrigeration system contains at least one compressor and at least one expansion valve, and consists in a closed-loop refrigeration circuit in which a refrigerant fluid flows and where the at least one compressor is dedicated to compress the refrigerant. Here, the refrigeration circuit contains at least one compressor. However, depending on the application, the refrigeration circuit may also contain multiple identical compressors and/or different types of fixed capacity or variable capacity compressors. Due to the system architecture, and/or communication and data transfer limitations, the amount and type of the N compressors currently running in the refrigeration system is not always available to the system operator. However, for efficiently controlling the refrigeration system, such as for example controlling the superheat value, it is important for the system operator to be aware of the compressors running in the system at any given time.

For detecting the present operational mode, i.e. the on and off states of the N compressors, e.g. compressor 1 is on and compressor 2 is off, etc., one or more circuit parameter values from the refrigeration circuit are measured. The measuring can be done by reading in, i.e. sampling, values from at least one of the many temperature and pressure sensors that are dispersed throughout the refrigeration circuit. For example, sensors can be arranged on or in the compressor(s), the tubes, the expansion valve, etc. Also, values other than temperature and pressure values can be used instead or in addition to the above referenced circuit parameter values, such as the compressor power, etc. The circuit parameter values can be periodically measured and then, for example, stored in a memory that is connected to the refrigeration circuit.

A first performance model of the refrigeration circuit is then used to calculate for at least one of the possible operational modes x of the N compressors the respective suction flow value, $M_{pm}[1 ... x]$, as a function of at least one of the one or more measured circuit parameter values. For example, this could be done by calculating the suction flow value, $M_{pm}[1 ... x]$, for each possible compressor running mode and by subsequently storing these values in a memory. For example, the memory could be the same memory in which the circuit parameter values are already stored. Alternatively, the suction flow values, $M_{pm}[1 ... x]$, could be also calculated one by one, i.e. after the suction flow value for a certain mode was calculated, e.g. $M_{pm}[1]$, the value could be saved to be used for subsequent processing/comparing it to a reference value, i.e. before the next suction flow value, e.g. $M_{pm}[1+1]$, for the next mode is calculated.

As explained above, a performance model could be any model capable of modelling the behavior of the refrigeration circuit. It has been found that the suction flow value, M, serves as a very reliable indicator for detecting the present operational mode of the N compressors. Therefore, in one example, for the possible operational modes x of the N compressors the respective suction flow values, $M_{pm}[1 ... x]$, can be calculated as a function of N, $P_1$, $P_2$, and $T_1$ from the refrigeration circuit with the first performance model, where, x, denotes all possible operational modes of the N compressors, $P_1$, is the suction pressure, $P_2$, is the discharge pressure which is representative of the valve inlet pressure, and $T_1$, is the suction temperature. The present flow value, $M_{evm}$, through the expansion valve is calculated with a second performance model, as for example, a regression-type model, as described above.

The calculated flow suction flow value, $M_{pm}[1...x]$ of at least one of the possible operational modes x, is then compared to the present flow value , $M_{evm}$, through the expansion valve. This can be done until the current operational mode is detected, i.e. until both flow values are substantially equal. Both flow values might be substantially equal if they differ by less than 5% to 10% from each other.

According to invention, an apparatus for detecting a present operational mode of a number of N compressors installed in a refrigeration circuit containing at least an expansion valve, and the number of N compressors, comprises: means for measuring one or more circuit parameter values of the refrigeration circuit, means for calculating for the possible operational modes, x, of the N compressors the respective suction flow value, $M_{pm}[1 ... x]$, with a first performance model as a function of at least one of the one or more measured circuit parameter values, means for calculating a present flow value, $M_{evm}$, through the expansion valve with a second performance model as a function of at least one of the one or more measured circuit parameter values, and means for comparing the calculated suction flow value, $M_{pm}[1 ... x]$, from the first performance model for each operational mode to the present flow value, $M_{evm}$, to detect the present operational mode, if the values for the calculated suction flow value, $M_{pm}[1 ... x]$, and the present flow value, $M_{evm}$, are substantially equal.

In the following, the present invention is further described by reference to the schematic illustrations shown in the figures, wherein:

Figure 1        is a circuit diagram of an embodiment of a refrigeration circuit as it can be used in connection with the invention;

Figure 2        is a block diagram of an embodiment of the method for performance model cross-mapping according to the invention;

Figures 3a,b,c   are charts showing the break-in period of an exemplarily compressor(s) that can be used with various embodiments of the invention;

Figure 4    is a block diagram of an embodiment of the method for performance model cross-mapping according to the invention that is used for determining whether at least one performance model needs to be calibrated;

Figure 5    is a chart showing an embodiment of calibrating at least one performance model according to the invention.

Figure 6    is a block diagram of an embodiment of the method for performance model cross-mapping according to the invention that is used for fault detection;

Figures 7a,b    are block diagrams of embodiments of the method for performance model cross-mapping according to the invention that is used for superheat control;

Figures 8a,b    are block diagrams of embodiments of the method for performance model cross-mapping according to the invention that is used for compressor discharge state control;

Figure 9    is a block diagram of an embodiment of the method for performance model cross-mapping according to the invention that is used for performance prediction; and

Figure 10    is a block diagram of an embodiment of the method for detecting a present operational mode of a number N of compressors installed in a refrigeration circuit.

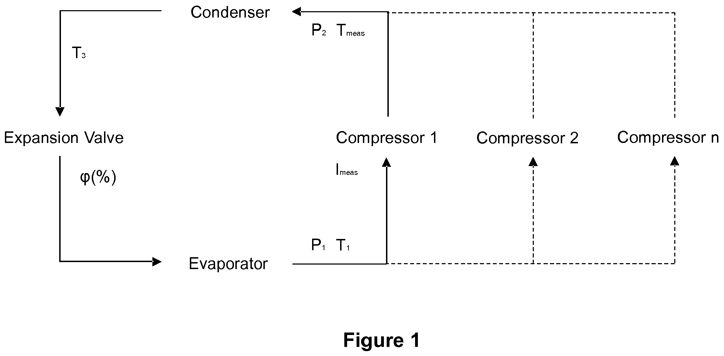

Figure 1 shows an example of a basic refrigeration circuit where the first and second performance models according to the present invention could be applied to. The shown refrigeration circuit contains the basic components necessary to build the refrigeration circuit. The refrigeration circuit contains at least one compressor that draws in low-temperature and low-pressure refrigerant vapor from the evaporator and compresses the refrigerant for supplying it to a condenser where heat is extracted from the refrigerant to the outside air, or to some other outside fluid. In the condenser the refrigeration vapor is cooled down from a vaporized state to a liquid state. The refrigerant then flows from the condenser through an expansion valve, where the pressure, and hence the temperature of the refrigerant is reduced, to an evaporator. In the evaporator unwanted heat is removed from the refrigerant, so that low-temperature and low-pressure refrigerant vapor can be fed to the at least one compressor again.

In the shown refrigeration circuit, various sensors are mounted in various locations to sense the values of the corresponding circuit parameters. In the here shown example, the sensors are transducers that convert the circuits parameters, i.e. the physical values in electric signals, so that they can be for example supplied to an controller that can use the sensed values for further processing. As shown in Figure 1, the suction temperature, $T_1$, and the suction pressure, $P_1$, are sensed at a location between evaporator and the at least one compressor. The corresponding sensors could be installed directly in the compressor, or anywhere on the suction line between evaporator and compressor. The discharge temperature, $T_{meas}$, and the discharge pressure, P2, are sensed between the at least one compressor and the condenser. The respective sensors could be also installed directly inside the compressor housing, or on/in the suction line between compressor and condenser. Figure 1 shows that a further temperature value, $T_3$, is sensed by means of a sensor that can be arranged in the expansion valve, or at some location on/in the circuit between condenser and expansion valve. This sensor is configured to sense the temperature of the refrigerant, $T_3$, before it enters the expansion valve. The expansion valve also contains at least one sensor that senses the opening of the valve, $\varphi$, i.e. the opening of the orifice that is installed in the expansion valve. However, instead of employing a sensor that senses the actual orifice opening by appropriate sensing means, information about the desired opening of the expansion valve, $\varphi$, could be also obtained from the controller which is adapted to control the valve opening. Also, the electric power consumption, $I_{meas}$, by the at least one compressor could be measured by a power meter or ampere meter that is located in the electric supply line of the at least one compressor.

These circuit parameters can be used to describe the current operation conditions of the refrigeration circuit. Therefore, a controller, or processing unit (not shown) could be connected to the sensors, so that the circuit parameters could be used for controlling the refrigeration circuit, or for detecting sub-optimal working conditions. This is usually done by using performance models, i.e. this can be done by modelling or mapping.

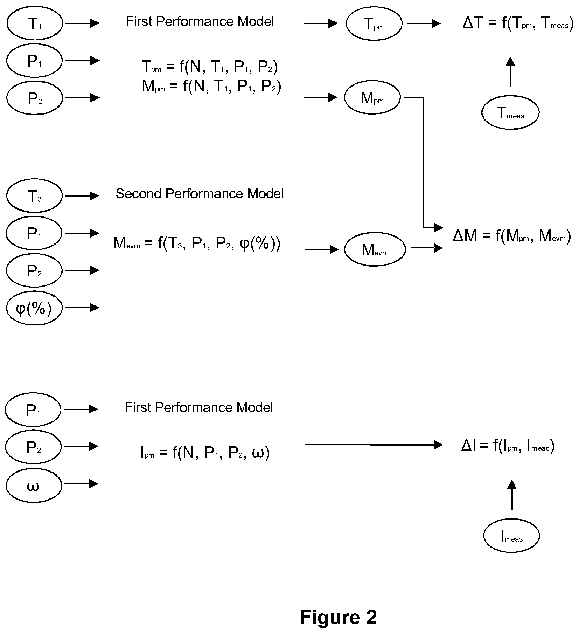

Figure 2 shows a block diagram of performance model cross-mapping. Before any calculations are done, one or more circuit parameter values of the refrigeration circuit, for example, as shown in Figure 1 are measured. According to the shown embodiment, a first performance model is used to calculate a discharge line temperature, $T_{pm}$, as a function of the number of compressors, N, running in the circuit, the suction pressure, $P_1$, the discharge pressure, P2, and the suction temperature, $T_1$, from the refrigeration circuit. Also, as shown in Figure 2, a first flow, $M_{pm}$, is calculated with the first performance model as a function of N, $P_1$, $P_2$, and $T_1$ with the refrigeration circuit using the performance model.

Here, the discharge line temperature, $T_{pm}$, and the first flow, $M_{pm}$, are calculated with the first performance model as a function of the circuit parameters and historical values that, in fact, constitute said first performance model. The skilled person would understand that the first performance model of the refrigeration circuit can be any model capable of modelling the behavior of the refrigeration circuit such as a black-box regression-type model, a white-box deterministic model that relies on physical relationships or a grey-box model that uses both approaches.

Figure 2 also shows that a second flow, $M_{evm}$, through the expansion valve is calculated using a second performance model. As already described above, the second performance model could be, for example, a regression-type model, where the characteristic equation for the expansion valve could be expressed as a relationship between valve flow, valve opening and system operating conditions. For example, the second flow, $M_{evm}$, could be calculated as a function of the suction pressure, $P_1$, the discharge pressure, P2, the liquid temperature, $T_3$, and the valve opening, $\varphi$.

As shown in Figure 2, a first differential value, $\Delta T$, is calculated by comparing the calculated discharge line temperature, $T_{pm}$ from the first performance model to a measured value for the discharge line temperature, $T_{meas}$, from the refrigeration circuit, and a second differential value, $\Delta M$, is calculated by comparing the first flow, $M_{pm}$, to the second flow, $M_{evm}$. It can then be evaluated, whether the first differential value, $\Delta T$, and the second differential value, $\Delta M$, are within a given range. The skilled person understands that according to the application this range could vary. For example, different ranges may apply for detecting a system fault, for calibrating at least one of the first and second performance models, for adjusting system operation, etc.

Figure 2 further shows that in addition to the first and the second differential values, $\Delta T$, $\Delta M$, a third differential value, $\Delta I$, can be calculated as well. A power consumption, $I_{pm}$, can be calculated as a function of at least one of the one or more measured circuit parameter values. In one example, the power consumption, $I_{pm}$, could be calculated from the first performance model, as a function of the suction pressure $P_1$, the discharge pressure, P2, and a compressor speed, $\omega$. A measured power consumption value, $I_{meas}$, can be obtained by means of a power or current sensor that is installed in the electric main line, supplying the at least one compressor in the refrigeration circuit with electric energy. Both values are then compared to obtain the third differential value, $\Delta I$.

In addition to evaluating the first and the second differential values, $\Delta T$, $\Delta M$, for cross-mapping, the third differential value, $\Delta I$, can be also evaluated to obtain even more accurate results.

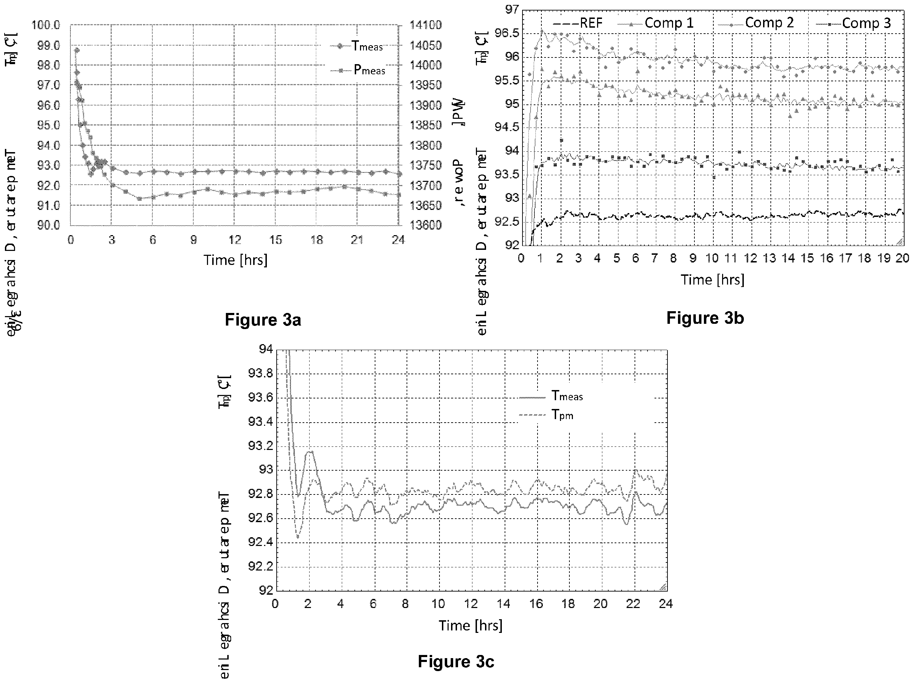

Figures 3a,b,c show the break-in period of an exemplarily compressor(s), for example an compressor as shown in figure 1, that can be used with various embodiments of the invention. All figures 3a,b,c show that during the first hours of operation of the refrigeration circuit, break-in effects have a major impact on the circuit parameters. Before break-in is done, compressor performance cannot be accurately predicted for monitoring, control or fault detection purposes.

Figure 3a shows the evolution of consumed power of the compressor and discharge line temperature during the break-in period of the compressor operating at a stable given condition. Both power and discharge line temperature show transient oscillating behavior before stabilizing at their "nominal value", i.e. until they remain stable. In the here shown example, the first performance model is ready to be used for predicting performance based on determining that at least the measured discharge line temperature, $T_{meas}$, remains stable. Here, stable can be defined as the time derivative of the first differential value being close to 0, for example an order of magnitude 1E-3 to 1E-6 which means that the discharge line temperature, $T_{meas}$, does not vary more than 0.5° Kelvin over the entire operation period. As shown in Figure 3a, the consumed power is equally suitable for determining the end of the break-in period.

In the here shown example, break-in can be considered as accomplished after 3 to 4 hours of operation.

Figures 3b and 3c show how the evolution of the performance of the compressor could be tracked by comparing measured and predicted values of the discharge line temperature. In Figure 3b a reference discharge line temperature is shown, that could have been made available by the compressors manufacturer as a typical value, wherein the lines labelled with Comp 1, Comp 2, Comp 3 show exemplarily the discharge line temperature of three different compressors of the same compressor type.

In the shown example, the break-in can be considered as accomplished for a compressor when one or both of the following conditions are satisfied:

- Sufficient integrated operating-running time: the criteria could be defined in terms of an "operation" index characterizing the running history of the compressor, and/or
- Tracking the evolution of the discharge line temperature against time and determining when the filtered time derivative becomes null or close to zero.

Figure 3b shows that at the end of the break-in period, there is still a remaining difference between the actual discharge line temperature for the various compressors and the reference discharge line temperature. This difference is caused by manufacturing and application tolerances.

In Figure 3c, a time-temperature chart is shown, where the measured discharge line temperature $T_{meas}$ and a calculated discharge line temperature $T_{pm}$ are both shown together. Here, the remaining difference between the measured discharge line temperature $T_{meas}$ and the calculated discharge line temperature $T_{pm}$ also accounts for manufacturing and application tolerances.

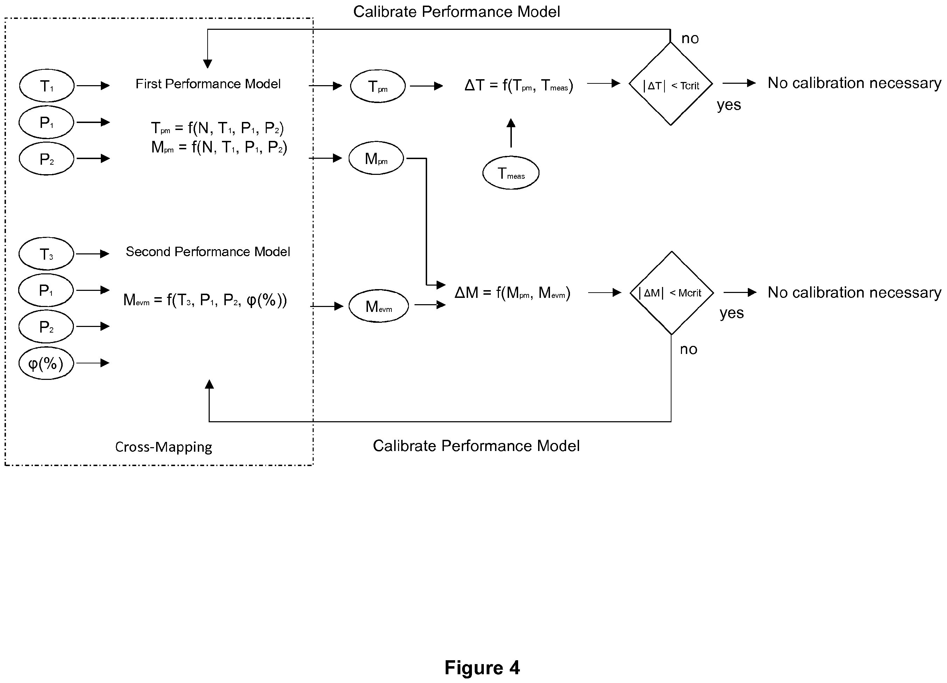

Figure 4 illustrates a block diagram of an embodiment of the method for performance model cross-mapping according to the invention that is used for determining whether at least one performance model needs to be calibrated after it was initially calibrated;

In the here shown embodiment, a determination is made whether or not to calibrate the first and/or the second performance model based on evaluating the differential values $\Delta T$, $\Delta M$. For example, this determining could be done periodically after at least the first performance model was calibrated based on an indication that the first performance model is ready to be used for predicting performance. Figure 4 shows that the magnitudes, $|\Delta T|$, $|\Delta M|$ of the two differential values, $\Delta T$, $\Delta M$, of the performance model cross mapping, as shown in Figure 2, are compared against two corresponding threshold values $T_{crit}$ and $M_{crit}$. If at least one of the magnitudes $|\Delta T|$, $|\Delta M|$ of the two differential values, $\Delta T$, $\Delta M$, exceeds its corresponding threshold value $T_{crit}$ and/or $M_{crit}$, an indication could be generated that the first and/or the second performance model needs to be calibrated. Here, the respective threshold values $T_{crit}$ and $M_{crit}$ strongly depend on the application and the system setup. For example, the threshold values could be chosen so that the two values that form the differential values $\Delta T$, and $\Delta M$, respectively cannot differ by more than 5% from each other.

In Figure 4 it is shown that the first performance model is calibrated in response to $|\Delta T|$ exceeding $T_{crit}$ and that the second performance model is calibrated in response to $|\Delta M|$ exceeding $T_{crit}$. However, the skilled person would know that both the first and the second performance model could be calibrated in response to one magnitude $|\Delta T|$, $|\Delta M|$ exceeding its corresponding threshold value, or that only the first performance model is calibrated in response to either $|\Delta T|$, $|\Delta M|$ exceeding its corresponding threshold value.

The calibrating could be done by calibrating the compressor performance/efficiency curves that are comprised within the performance model(s) based on the measured discharge temperature, $T_{meas}$. This allows more accurate prediction of current compressor performance (e.g. power consumption, suction flow, isentropic efficiency...) in actual operating conditions.

For example, the calibration can be done following a deterministic approach or a recursive approach:

- In a deterministic approach, pre-determined corrective function are used to calibrate the output of the prediction model as a function of measured parameters to fit to reality,
- In a recursive approach, parameters of the performance model are directly re-estimated to fit to discharge line temperature measurements.

Afterwards, the calibrated first performance model can then be used to allow calibrating the second performance model and identifying the actual flow-operating condition relationship.

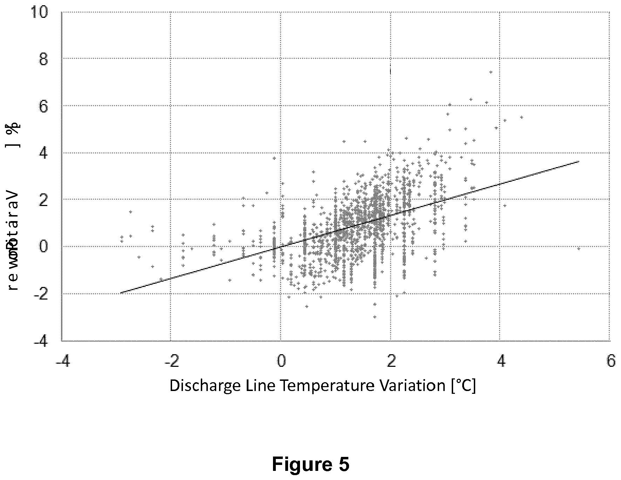

Figure 5 shows how at least one performance model according to the invention is calibrated. In the shown example, the relationship existing between power variation, e.g. versus an reference value and discharge line temperature variation, e.g. versus another reference value. The skilled person would know that similar relationships exist between isentropic efficiency deviations, volumetric efficiency deviations, etc., and discharge line temperature deviations, vs. reference.

These relationships can be observed based on compressor manufacturer quality, reliability and performance data for various types of compressors and different operating conditions. The existence of such relationships may be used to calibrate, e.g. to adjust, the parameters of the first performance model, e.g. AHRI coefficients, as function of actual discharge temperature measured during compressor operation, as it can be done during calibrating the first and/or the second performance model as, for example, described in Figure 4.

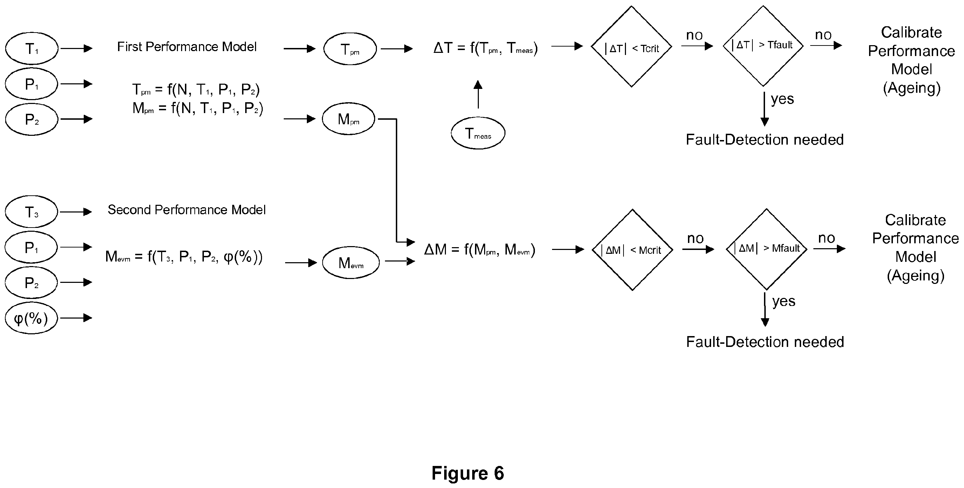

Figure 6 is a block diagram of an embodiment of the method for performance model cross-mapping used for fault detection. Here, the cross-mapping and calibration set-up as shown in Figure 4 is used for determining faults. In particular, figure 6 illustrates the re-calibration process necessary to take into account normal ageing of the system components, as described above with reference to Figure 4, and further shows how to distinguish ageing from faulty operation by tracking the values of at least one of the differential values $\Delta T$, $\Delta M$, and/or $\Delta I$ (not shown). Therefore, further threshold values $T_{fault}$ and $M_{fault}$ are introduced to detect a fault in the system. As shown in Figure 6, if the magnitudes $|\Delta T|$, $|\Delta M|$ of the two differential values, $\Delta T$, $\Delta M$, exceed their corresponding threshold values $T_{crit}$ and $M_{crit}$ for calibration, and also exceed their fault threshold values $T_{fault}$ and $M_{fault}$, a fault can be detected. Therefore, the fault threshold values $T_{fault}$ and $M_{fault}$ could be chosen so that the values that form each of the differential values $\Delta T$, and $\Delta M$, respectively cannot differ by more than 10% from each other. Therefore, in this example, calibrating the performance model would be necessary if the values that form each of the differential values $\Delta T$, and $\Delta M$, would be differ by more than 5% and a fault would be detected if the values differ by more than 10%. However, the skilled person knows that depending on the compressor type and/or the overall system setup different values could be used instead.

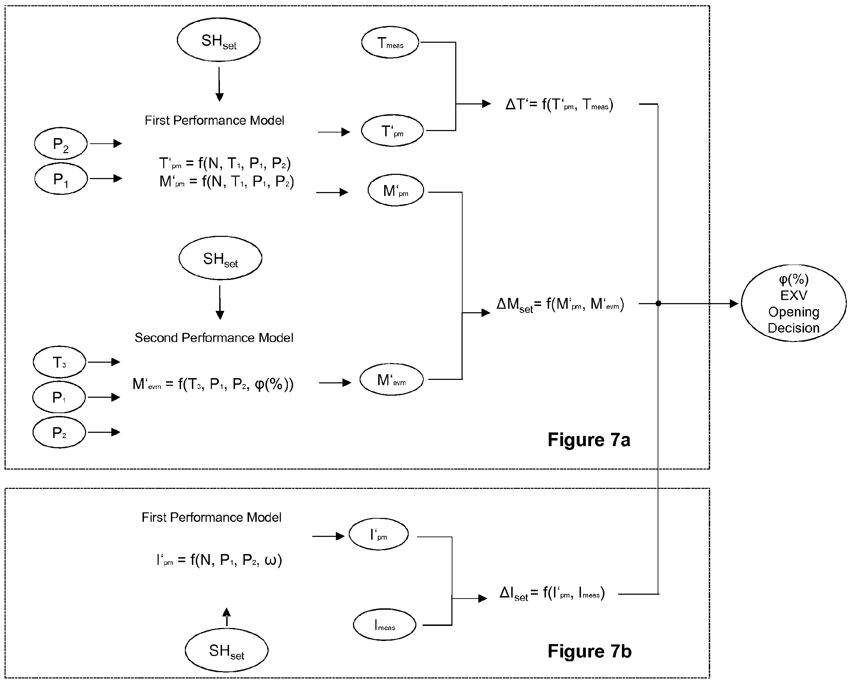

Figure 7a illustrates the use of the first and second performance model as shown and described above with reference to the foregoing figures for superheat control. In order to increase the accuracy of controlling the expansion valve, the performance models could be already calibrated as described above.

Here, a further discharge line temperature, $T'_{pm}$, is calculated with the first performance model as a function of at least one or more ideal circuit parameter values of a desired superheat operating condition, $SH_{set}$. The calculated further discharge line temperature, $T'_{pm}$, is then compared to the measured discharge line temperature, $T_{meas}$, from the refrigeration circuit to obtain a further first differential value, $\Delta T'$. Also, a further first flow, $M'_{pm}$, is calculated with the first performance model as a function of at least one or more ideal circuit parameter values of the desired superheat operating condition, $SH_{set}$. Then, a further second flow, $M'_{evm}$, is calculated through the expansion valve with the second performance model for the expansion valve as a function of at least one or more ideal circuit parameter values of the superheat operating condition, $SH_{set}$, the further first flow, $M'_{pm}$, is compared to the further second flow, $M'_{evm}$, to obtain a further second differential value, $\Delta M'$, and the opening of the expansion valve is adjusted based on one of at least the further first differential value, $\Delta T'$, and the further second differential value, $\Delta M'$.

In addition, or alternatively to the superheat control as described above, Figure 7b shows that a further power consumption, $I'_{pm}$, of the desired superheat operating condition, $SH_{set}$ can be also calculated. The further calculated power consumption, $I'_{pm}$, is then compared to the measured power consumption, $I_{meas}$, from the refrigeration circuit to obtain a further third differential value, $\Delta I'$. Therefore, the opening of the expansion valve can be also adjusted based on the further third differential value, $\Delta I'$.

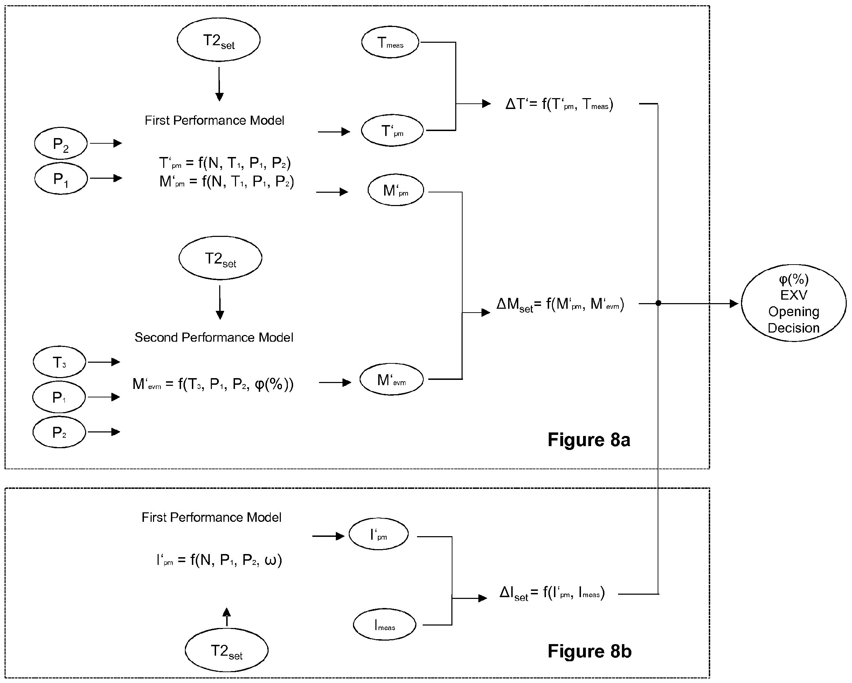

Figures 8a and 8b illustrate the use of the cross-mapping for discharge state control. Instead of employing a desired superheat operating condition, $SH_{set}$, a desired discharge condition $T2_{set}$ is used for adjusting the opening of the expansion valve.

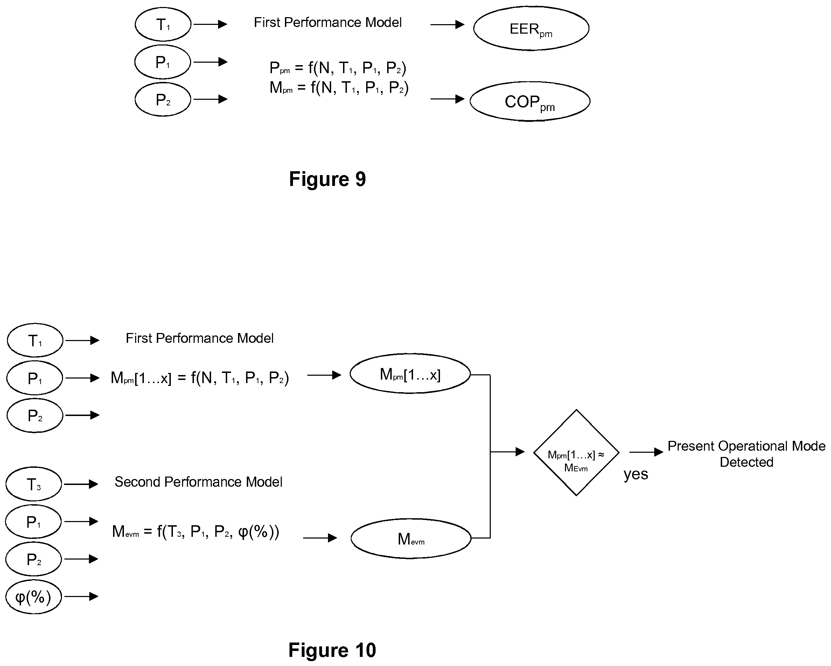

Figure 9 shows a block diagram of an embodiment of the first performance model according to the invention used for performance prediction. For accurate performance prediction, the performance model should be already calibrated, as described above. The first performance model can then be used to calculate the Energy Efficiency Ratio, EER, which accounts for the efficiency of a compressor at a specific condition, or to calculate the Coefficient of Performance, COP, which describes the ratio of the output, i.e. the heat absorbed, divided by the input, i.e. the energy required to produce the output.

Therefore, a reference performance level can be computed/generated with the first performance model, where the system should be able to achieve this level of performance during its whole lifetime.

Such reference performance levels can be continuously generated and stored to allow continuous performance predicting of the refrigeration circuit

If significant deviation is detected between actual performance level and reference performance level established by the first performance model, an alarm can be raised and specific fault detection methods could be activated to identify the source of the discrepancy.

Figure 10 shows a block diagram of an embodiment of the method for detecting a present operational mode of a number N of compressors installed in a refrigeration circuit. Here, the refrigeration system could be the refrigeration system that is shown in Figure 1 which might include a plurality of compressors N. In the shown example, a first performance model of the refrigeration circuit can be used to calculate for at least one of the possible operational modes x of the N compressors the respective suction flow value, $M_{pm}[1 ... x]$. The first performance model could be, for example, the first performance model as shown and described with reference to the previous figures.

For detecting the present operational mode, i.e. the on and off states of the N compressors, e.g. compressor 1 is on and compressor 2 is off, etc. the first performance model of the refrigeration circuit is used to calculate for at least one of the possible operational modes x of the N compressors the respective suction flow value, $M_{pm}[1 ... x]$, as a function of at least one of the one or more measured circuit parameter values. Here, the suction flow values, $M_{pm}[1 ... x]$, for all possible compressor running scenario could be calculated and then stored for comparing the suction flow values, $M_{pm}[1 ... x]$, one by one to a present flow value, $M_{evm}$, through the expansion valve which is calculated with a second performance model, as for example, a regression-type model as described above. This can be done until the current operational mode is detected, i.e. until both flow values are substantially equal. Both flow values might be substantially equal if they differ by less than 2% from each other.

However, alternatively, each suction flow value, $M_{pm}[1 ... x]$, for each compressor running scenario could be calculated individually and then being compared to the present flow value, $M_{evm}$, through the expansion valve. This could be also done until the current operational mode is detected.

**Claims**

1. A method of performance model cross-mapping in a refrigeration circuit containing at least one compressor and an expansion valve, the method comprising:

   measuring a suction pressure, P1, a discharge pressure, P2, a suction temperature, T1, from the refrigeration circuit and a temperature of a refrigerant before it enters the expansion valve, T3,

calculating a discharge line temperature, $T_{pm}$, with a first performance model as a function of the following circuit parameter values: a number of compressors, N, running in the circuit, the measured suction pressure, P1, the measured discharge pressure, P2, and the measured suction temperature, T1, from the refrigeration circuit and comparing the calculated discharge line temperature, $T_{pm}$, to a measured discharge line temperature, $T_{meas}$, from the refrigeration circuit to obtain a first differential value, $\Delta T$,

calculating a first mass flow, $M_{pm}$, with the first performance model as a function of the following circuit parameter values: the number of compressors, N, running in the circuit, the measured suction pressure, P1, the measured discharge pressure, P2, and the measured suction temperature, T1, from the refrigeration circuit,

calculating a second mass flow, $M_{evm}$, through the expansion valve with a second regression-type performance model where the characteristic equation for the expansion valve is expressed as a relationship between valve mass flow, valve

opening, $\varphi$, the measured suction pressure, P1, the measured discharge pressure, P2 and the temperature of the refrigerant before it enters the expansion valve T3,

comparing the first mass flow, $M_{pm}$, to the second mass flow, $M_{evm}$, to obtain a second differential value, $\Delta M$, and

evaluating the first differential value, $\Delta T$, and the second differential value, $\Delta M$.

2. The method of claim 1, further comprising:
indicating that at least the first performance model is ready to be used for predicting performance of the refrigeration circuit based on determining that at least one of the measured discharge line temperature, $T_{meas}$, and the first differential value, $\Delta T$, remains stable.

3. The method of claim 2, wherein the first performance model is calibrated in response to the indication that the first performance model is ready to be used for predicting performance.

4. The method of any of claims 1 to 3, wherein the evaluating comprises determining whether to calibrate the first performance model based on at least one of the two differential values, $\Delta T$, $\Delta M$.

5. The method of any of claims 1 to 4, further comprising:

indicating a sensor fault based on determining that the first differential value, $\Delta T$, is outside a predetermined range; and/or
indicating an expansion valve fault based on determining that the first and second mass flow values, $M_{pm}$, $M_{evm}$, used to obtain the second differential value, $\Delta M$, differ by a predetermined percentage from each other.

6. The method of any of claims 1 to 5, wherein the evaluating comprises:
determining the presence of a fault based on at least one of the two differential values, $\Delta T$, $\Delta M$.

7. The method of any of claims 1 to 6, further comprising:

calculating a power consumption, $I_{pm}$, of the at least one compressor with the first performance model as a function of at least one of the at least one or more measured circuit parameter values and comparing the calculated power consumption, $I_{pm}$, to a measured power consumption, $I_{meas}$, from the refrigeration circuit to obtain a third differential value, $\Delta I$, and
evaluating the third differential value, $\Delta I$.

8. The method of any of claims 1 to 7, further comprising:

calculating a further discharge line temperature, $T'_{pm}$, with the first performance model as a function of at least one or more ideal circuit parameter values of a desired operating condition,
comparing the calculated further discharge line temperature, $T'_{pm}$, to the measured discharge line temperature, $T_{meas}$, from the refrigeration circuit to obtain a further first differential value, $\Delta T'$,
calculating a further first mass flow, $M'_{pm}$, with the first performance model as a function of at least one or more ideal circuit parameter values of the desired operating condition,
calculating a further second mass flow, $M'_{evm}$, through the expansion valve with the second performance model for the expansion valve as a function of at least one or more ideal circuit parameter values of the desired operating condition,
comparing the further first mass flow, $M'_{pm}$, to the further second mass flow, $M'_{evm}$, to obtain a further second differential value, $\Delta M'$, and

adjusting the opening of the expansion valve based on one of at least the further first differential value, $\Delta T'$, and the further second differential value, $\Delta M'$.

9. The method of claim 8, further comprising:

calculating a further power consumption, $I'_{pm}$, of the at least one compressor with the first performance model as a function of at least one or more ideal circuit parameter values of the desired operating condition, comparing the further calculated power consumption, $I'_{pm}$, to the measured power consumption, $I_{meas}$, from the refrigeration circuit to obtain a further third differential value, $\Delta I'$, and adjusting the opening of the expansion valve based on the further third differential value, $\Delta I'$.

10. An apparatus for performance model cross-mapping in a refrigeration circuit containing at least one compressor and an expansion valve, the apparatus comprising:

means for measuring a suction pressure, P1, a discharge pressure, P2, a suction temperature, T1, from the refrigeration circuit and a temperature of a refrigerant before it enters the expansion valve, T3, means for calculating a discharge line temperature, $T_{pm}$, with a first performance model as a function of the following circuit parameter values: a number of compressors, N, running in the circuit, the measured suction pressure, P1, the measured discharge pressure, P2, and the measured suction temperature, T1, from the refrigeration circuit and means for comparing the calculated discharge line temperature, $T_{pm}$, to a measured discharge line temperature, $T_{meas}$, from the refrigeration circuit to obtain a first differential value, $\Delta T$, means for calculating a first mass flow, $M_{pm}$, with the first performance model as a function of the following circuit parameter values: the number of compressors, N, running in the circuit, the measured suction pressure, P1, the measured discharge pressure, P2, and the measured suction temperature, T1, from the refrigeration circuit, means for calculating a second mass flow, $M_{evm}$, through the expansion valve with a second regression-type performance model where the characteristic equation for the expansion valve is expressed as a relationship between valve mass flow, valve opening, $\varphi$, the measured suction pressure, P1, the measured discharge pressure, P2 and the temperature of the refrigerant before it enters the expansion valve T3, means for comparing the first mass flow, $M_{pm}$, to the second mass flow, $M_{evm}$, to obtain a second differential value, $\Delta M$, and means for evaluating the first differential value, $\Delta T$, and the second differential value, $\Delta M$.

**Patentansprüche**

1. Ein Verfahren zur Leistungsmodell-Querabbildung in einem Kühlkreislauf, der mindestens einen Verdichter und ein Expansionsventil enthält, das Verfahren aufweisend:

Messen eines Ansaugdrucks, P1, eines Auslassdrucks, P2, einer Ansaugtemperatur, T1, von dem Kühlkreislauf und einer Temperatur eines Kühlmittels vor seinem Eintritt in das Expansionsventil, T3, Berechnen einer Auslassleitungstemperatur, $T_{pm}$, mit einem ersten Leistungsmodell als eine Funktion der folgenden Kreislaufparameterwerte:

eine Anzahl von Verdichtern, N, die in dem Kreislauf laufen, der gemessene Ansaugdruck, P1, der gemessene Auslassdruck, P2, und die gemessene Ansaugtemperatur, T1, von dem Kühlkreislauf und Vergleichen der berechneten Auslassleitungstemperatur, $T_{pm}$, mit einer gemessenen Auslassleitungstemperatur, $T_{meas}$, von dem Kühlkreislauf, um einen ersten Differentialwert, $\Delta T$, zu erhalten, Berechnen eines ersten Massenstroms, $M_{pm}$, mit dem ersten Leistungsmodell als eine Funktion der folgenden Kreislaufparameterwerte:

die Anzahl von Verdichtern, N, die in dem Kreislauf laufen, der gemessene Ansaugdruck, P1, der gemessene Auslassdruck, P2, und die gemessene Ansaugtemperatur, T1, von dem Kühlkreislauf, Berechnen eines zweiten Massenstromes, $M_{evm}$, durch das Expansionsventil mit einem zweiten regressionsartigen Leistungsmodell, bei dem die charakteristische Gleichung für das Expansionsventil ausgedrückt wird als eine Beziehung zwischen dem Ventilmassenstrom, Ventilöffnung, $\varphi$, dem gemessenen Ansaugdruck, P1, dem gemessenen Auslassdruck, P2, und der Temperatur des Kühlmittels vor seinem Eintreten in das Expansionsventil, T3,

Vergleichen des ersten Massenstroms, $M_{pm}$, mit dem zweiten Massenstrom, $M_{evm}$, um einen zweiten Differentialwert, $\Delta M$, zu erhalten, und

Bewerten des ersten Differentialwertes, $\Delta T$, und des zweiten Differentialwertes, $\Delta M$.

2. Die Methode nach Anspruch 1, weiter aufweisend:

Anzeigen, dass zumindest das erste Leistungsmodell bereit ist, zum Vorhersagen der Leistung des Kühlkreislaufs verwendet zu werden, basierend auf Bestimmen, dass zumindest einer von der gemessenen Auslassleitungstemperatur, $T_{meas}$, und dem ersten Differentialwert, $\Delta T$, stabil bleibt.

3. Das Verfahren nach Anspruch 2, wobei das erste Leistungsmodell kalibriert wird als Reaktion auf die Anzeige, dass das erste Leistungsmodell bereit ist, zum Vorhersagen der Leistung verwendet zu werden.

4. Das Verfahren nach einem der Ansprüche 1 bis 3, wobei das Bewerten aufweist:

Bestimmen, ob das erste Leistungsmodell basierend auf mindestens einem der beiden Differentialwerte, $\Delta T$, $\Delta M$, kalibriert werden soll.

5. Das Verfahren nach einem der Ansprüche 1 bis 4, weiter aufweisend:

Anzeigen eines Sensorfehlers basierend auf Feststellen, dass der erste Differentialwert, $\Delta T$, außerhalb eines vorbestimmten Bereichs liegt; und/oder

Anzeigen eines Fehlers des Expansionsventils basierend auf Feststellen, dass der erste und der zweite Massenstromwert, $M_{pm}$, $M_{evm}$, die zum Erhalten des zweiten Differentialwertes, $\Delta M$, verwendet werden, sich um einen vorbestimmten Prozentsatz voneinander unterscheiden.

6. Das Verfahren nach einem der Ansprüche 1 bis 5, wobei das Bewerten aufweist:

Bestimmen des Vorhandenseins eines Fehlers basierend auf mindestens einem der beiden Differentialwerte, $\Delta T$, $\Delta M$.

7. Das Verfahren nach einem der Ansprüche 1 bis 6, weiter aufweisend:

Berechnen einer Leistungsaufnahme, $I_{pm}$, des mindestens einen Verdichters mit dem ersten Leistungsmodell als eine Funktion von mindestens einem der mindestens einen oder mehreren gemessenen Kreislaufparameterwerten und Vergleichen der berechneten Leistungsaufnahme, $I_{pm}$, mit einer gemessenen Leistungsaufnahme, $I_{meas}$, von dem Kühlkreislauf, um einen dritten Differentialwert, $\Delta I$, zu erhalten, und Bewerten des dritten Differentialwertes, $\Delta I$.

8. Das Verfahren nach einem der Ansprüche 1 bis 7, weiter aufweisend:

Berechnen einer weiteren Auslassleitungstemperatur, $T'_{pm}$, mit dem ersten Leistungsmodell als eine Funktion von mindestens einem oder mehreren idealen Kreislaufparameterwerten eines gewünschten Betriebszustandes,

Vergleichen der berechneten weiteren Auslassleitungstemperatur, $T'_{pm}$, mit der gemessenen Auslassleitungstemperatur, $T_{meas}$, von dem Kühlkreislauf, um einen weiteren ersten Differentialwert, $\Delta T'$, zu erhalten,

Berechnen eines weiteren ersten Massenstroms, $M'_{pm}$, mit dem ersten Leistungsmodell als eine Funktion von mindestens einem oder mehreren idealen Kreislaufparameterwerten des gewünschten Betriebszustandes,

Berechnen eines weiteren zweiten Massenstromes, $M'_{evm}$, durch das Expansionsventil mit dem zweiten Leistungsmodell für das Expansionsventil als eine Funktion von mindestens einem oder mehreren idealen Kreislaufparameterwerten des gewünschten Betriebszustandes,

Vergleichen des weiteren ersten Massenstroms, $M'_{pm}$, mit dem weiteren zweiten Massenstrom, $M'_{evm}$, um einen weiteren zweiten Differentialwert, $\Delta M'$, zu erhalten, und

Einstellen der Öffnung des Expansionsventils basierend auf einem von mindestens dem weiteren ersten Differentialwert, $\Delta T'$, und dem weiteren zweiten Differentialwert, $\Delta M'$.

9. Das Verfahren nach Anspruch 8, weiter aufweisend:

Berechnen einer weiteren Leistungsaufnahme, $I'_{pm}$, des mindestens einen Verdichters mit dem ersten Leistungsmodell als eine Funktion von mindestens einem oder mehreren idealen Kreislaufparameterwerten des gewünschten Betriebszustandes,

Vergleichen der weiteren berechneten Leistungsaufnahme, I'$_{pm}$, mit der gemessenen Leistungsaufnahme, I$_{meas}$, von dem Kühlkreislauf, um einen weiteren dritten Differentialwert, $\Delta$I', zu erhalten, und

Einstellen der Öffnung des Expansionsventils basierend auf dem weiteren dritten Differentialwert, $\Delta$I'.

**10.** Eine Vorrichtung zur Leistungsmodell-Querabbildung in einem Kühlkreislauf, der mindestens einen Verdichter und ein Expansionsventil enthält, die Vorrichtung aufweisend:

Mittel zum Messen eines Ansaugdrucks P1, eines Auslassdrucks P2, einer Ansaugtemperatur T1 von dem Kühlkreislauf und einer Temperatur eines Kühlmittels vor seinem Eintritt in das Expansionsventil, T3,

Mittel zum Berechnen einer Auslassleitungstemperatur, T$_{pm}$, mit einem ersten Leistungsmodell als eine Funktion der folgenden Kreislaufparameterwerte: eine Anzahl von Verdichtern, N, die in dem Kreislauf laufen, der gemessene Ansaugdruck, P1, der gemessene Auslassdruck, P2, und die gemessene Ansaugtemperatur, T1, von dem Kühlkreislauf und Mittel zum Vergleichen der berechneten Auslassleitungstemperatur, T$_{pm}$, mit einer gemessenen Auslassleitungstemperatur, T$_{meas}$, von dem Kühlkreislauf, um einen ersten Differentialwert, $\Delta$T, zu erhalten,

Mittel zum Berechnen eines ersten Massenstroms, M$_{pm}$, mit dem ersten Leistungsmodell als eine Funktion der folgenden Kreislaufparameterwerte:

die Anzahl der Verdichter, N, die in dem Kreislauf laufen, der gemessene Ansaugdruck, P1, der gemessene Auslassdruck, P2, und die gemessene Ansaugtemperatur, T1, von dem Kühlkreislauf,

Mittel zum Berechnen eines zweiten Massenstroms, M$_{evm}$, durch das Expansionsventil mit einem zweiten regressionsartigen Leistungsmodell, bei dem die charakteristische Gleichung für das Expansionsventil ausgedrückt wird als eine Beziehung zwischen dem Ventilmassenstrom, Ventilöffnung, $\varphi$, dem gemessenen Ansaugdruck, P1, dem gemessenen Auslassdruck, P2, und der Temperatur des Kühlmittels vor seinem Eintreten in das Expansionsventil, T3,

Mittel zum Vergleichen des ersten Massenstromes, M$_{pm}$, mit dem zweiten Massenstrom, M$_{evm}$, um einen zweiten Differentialwert, $\Delta$M, zu erhalten, und

Mittel zum Bewerten des ersten Differentialwertes, $\Delta$T, und des zweiten Differentialwertes, $\Delta$M.

## Revendications

**1.** Un procédé de cross-mapping de modèles de performance dans un circuit de réfrigération comprenant au moins un compresseur et une soupape de détente, le procédé comprenant :

la mesure d'une pression d'aspiration, P1, d'une pression de refoulement, P2, d'une température d'aspiration, T1, du circuit de réfrigération et d'une température d'un réfrigérant avant qu'il entre dans la soupape de détente, T3,

le calcul d'une température de ligne de refoulement, T$_{pm}$, à partir d'un premier modèle de performance en fonction des valeurs de paramètres de circuit suivantes : un nombre de compresseurs, N, tournant dans le circuit, la pression d'aspiration mesurée, P1, la pression de refoulement mesurée, P2, et la température d'aspiration mesurée, T1, du circuit de réfrigération, et la comparaison de la température de ligne de refoulement calculée, T$_{pm}$, à une température de ligne de refoulement mesurée, T$_{meas}$, du circuit de réfrigération pour obtenir une première valeur différentielle, $\Delta$T,

le calcul d'un premier débit massique, M$_{pm}$, à partir du premier modèle de performance en fonction des valeurs de paramètre de circuit suivantes : le nombre de compresseurs, N, tournant dans le circuit, la pression d'aspiration mesurée, P1, la pression de refoulement mesurée, P2, et la température d'aspiration mesurée, T1, du circuit de réfrigération,

le calcul d'un second débit massique, M$_{evm}$, au travers de la soupape de détente à partir d'un second modèle de performance du type à régression dans lequel l'équation caractéristique pour la soupape de détente est exprimée sous forme d'une relation entre le débit massique, l'ouverture de la soupape, $\varphi$, la pression d'aspiration mesurée, P1, la pression de refoulement mesurée, P2, et la température du réfrigérant avant qu'il entre dans la soupape de détente, T3,

la comparaison du premier débit massique, M$_{pm}$, au second débit massique, M$_{evm}$, pour obtenir une seconde valeur différentielle $\Delta$M, et

l'évaluation de la première valeur différentielle, $\Delta$T, et de la seconde valeur différentielle, $\Delta$M.

**2.** Le procédé de la revendication 1, comprenant en outre :

l'indication qu'au moins le premier modèle de performance est prêt à être utilisé pour prédire les performances du circuit de réfrigération sur la base de la détermination qu'au moins l'une d'entre la température de ligne de refoulement mesurée, $T_{meas}$, et la première valeur différentielle, $\Delta T$, restent stables.

3. Le procédé de la revendication 2, dans lequel le premier modèle de performance est calibré en réponse à l'indication que le premier modèle de performance est prêt à être utilisé pour prédire les performances.

4. Le procédé de l'une des revendications 1 à 3, dans lequel l'évaluation comprend la détermination s'il y a ou non lieu de calibrer le premier modèle de performance sur la base d'au moins l'une des deux valeurs différentielles, $\Delta T$, $\Delta M$.

5. Le procédé de l'une des revendications 1 à 4, comprenant en outre :

l'indication d'une défaillance de capteur sur la base d'une détermination que la première valeur différentielle, $\Delta T$, est en dehors d'une plage prédéterminée ; et/ou
l'indication d'une défaillance de la soupape de détente sur la base d'une détermination que la première et la seconde valeur de débit massique, $M_{pm}$, $M_{evm}$, utilisées pour obtenir la seconde valeur différentielle, $\Delta M$, diffèrent l'une de l'autre d'un pourcentage prédéterminé.

6. Le procédé de l'une des revendications 1 à 5, dans lequel l'évaluation comprend :
la détermination de la présence d'une défaillance sur la base d'au moins l'une des deux valeurs différentielles, $\Delta T$, $\Delta M$.

7. Le procédé de l'une des revendications 1 à 6, comprenant en outre :

le calcul d'une consommation énergétique, $I_{pm}$, de l'au moins un compresseur à partir du premier modèle de performance en fonction d'au moins l'une des au moins une ou plus valeurs de paramètre de circuit mesurées, et la comparaison de la consommation énergétique calculée, $I_{pm}$, à une consommation énergétique mesurée, $I_{meas}$, du circuit de réfrigération pour obtenir une troisième valeur différentielle, $\Delta I$, et
l'évaluation de la troisième valeur différentielle, $\Delta I$.

8. Le procédé de l'une des revendications 1 à 7, comprenant en outre :

le calcul d'une autre température de ligne de refoulement, $T'_{pm}$, à partir du premier modèle de performance en fonction d'au moins une, ou plus, valeur de paramètres de circuit idéale d'un état de fonctionnement souhaité,
la comparaison de l'autre température de ligne de refoulement calculée, $T'_{pm}$, à la température de ligne de refoulement mesurée, $T_{meas}$, du circuit de réfrigération pour obtenir une autre première valeur différentielle, $\Delta T'$,
le calcul d'un autre premier débit massique, $M'_{pm}$, à partir du premier modèle de performance en fonction d'au moins une, ou plus, valeur de paramètre de circuit idéale de l'état de fonctionnement souhaité,
le calcul d'un autre second débit massique, $M'_{evm}$, au travers de la soupape de détente à partir du second modèle de performance pour la soupape de détente en fonction d'au moins une, ou plus, valeur de paramètre de circuit idéale de l'état de fonctionnement souhaité,
la comparaison de l'autre premier débit massique, $M'_{pm}$, à l'autre second débit massique, $M'_{evm}$, pour obtenir une autre seconde valeur différentielle, $\Delta M'$, et
l'ajustement de l'ouverture de la soupape de détente sur la base de l'une parmi au moins l'autre première valeur différentielle, $\Delta T'$, et l'autre seconde valeur différentielle, $\Delta M'$.

9. Le procédé de la revendication 8, comprenant en outre :

le calcul d'une autre consommation énergétique, $I'_{pm}$, de l'au moins un compresseur à partir du premier modèle de performance en fonction d'au moins une, ou plus, valeur de paramètre de circuit idéale de l'état de fonctionnement souhaité,
la comparaison de l'autre consommation énergétique calculée, $I'_{pm}$, à la consommation énergétique mesurée, $I_{meas}$, du circuit de réfrigération pour obtenir une autre troisième valeur différentielle, $\Delta I'$, et
l'ajustement de l'ouverture de la soupape de détente sur la base de l'autre troisième valeur différentielle, $\Delta I'$.

10. Un appareil de cross-mapping de modèles de performance dans un circuit de réfrigération comprenant au moins un compresseur et une soupape de détente, l'appareil comprenant :

un moyen de mesure d'une pression d'aspiration, P1, d'une pression de refoulement, P2, d'une température d'aspiration, T1, du circuit de réfrigération et d'une température d'un réfrigérant avant qu'il entre dans la soupape de détente, T3,

un moyen de calcul d'une température de ligne de refoulement, $T_{pm}$, à partir d'un premier modèle de performance en fonction des valeurs de paramètres de circuit suivantes : un nombre de compresseurs, N, tournant dans le circuit, la pression d'aspiration mesurée, P1, la pression de refoulement mesurée, P2, et la température d'aspiration mesurée, T1, du circuit de réfrigération, et un moyen de comparaison de la température de ligne de refoulement calculée, $T_{pm}$, à une température de ligne de refoulement mesurée, $T_{meas}$, du circuit de réfrigération pour obtenir une première valeur différentielle, $\Delta T$,

un moyen de calcul d'un premier débit massique, $M_{pm}$, à partir du premier modèle de performance en fonction des valeurs de paramètre de circuit suivantes : le nombre de compresseurs, N, tournant dans le circuit, la pression d'aspiration mesurée, P1, la pression de refoulement mesurée, P2, et la température d'aspiration mesurée, T1, du circuit de réfrigération,

un moyen de calcul d'un second débit massique, $M_{evm}$, au travers de la soupape de détente à partir d'un second modèle de performance du type à régression dans lequel l'équation caractéristique pour la soupape de détente est exprimée sous forme d'une relation entre le débit massique, l'ouverture de la soupape, $\varphi$, la pression d'aspiration mesurée, P1, la pression de refoulement mesurée, P2, et la température du réfrigérant avant qu'il entre dans la soupape de détente, T3,

un moyen de comparaison du premier débit massique, $M_{pm}$, au second débit massique, $M_{evm}$, pour obtenir une seconde valeur différentielle $\Delta M$, et

un moyen d'évaluation de la première valeur différentielle, $\Delta T$, et de la seconde valeur différentielle, $\Delta M$.

**Figure 1**

$T_1$ → First Performance Model → $T_{pm}$ → $\Delta T = f(T_{pm}, T_{meas})$

$P_1$ →

$P_2$ →    $T_{pm} = f(N, T_1, P_1, P_2)$

$M_{pm} = f(N, T_1, P_1, P_2)$ → $M_{pm}$

$T_{meas}$

$T_3$ → Second Performance Model

$P_1$ →

$M_{evm} = f(T_3, P_1, P_2, \varphi(\%))$ → $M_{evm}$ → $\Delta M = f(M_{pm}, M_{evm})$

$P_2$ →

$\varphi(\%)$ →

$P_1$ → First Performance Model

$P_2$ →

$I_{pm} = f(N, P_1, P_2, \omega)$ → $\Delta I = f(I_{pm}, I_{meas})$

$\omega$ →

$I_{meas}$

**Figure 2**

Figure 3b

Figure 3a

Figure 3c

Figure 4

EP 3 109 573 B1

**Figure 5**

$T_1$

$P_1$

$P_2$

First Performance Model

$T_{pm} = f(N, T_1, P_1, P_2)$
$M_{pm} = f(N, T_1, P_1, P_2)$

$T_{pm}$

$\Delta T = f(T_{pm}, T_{meas})$

$T_{meas}$

$|\Delta T| < Tcrit$ → no → $|\Delta T| > Tfault$ → no → Calibrate Performance Model (Ageing)

↓ yes

Fault-Detection needed

$T_3$

$P_1$

$P_2$

$\varphi(\%)$

Second Performance Model

$M_{evm} = f(T_3, P_1, P_2, \varphi(\%))$

$M_{pm}$

$M_{evm}$

$\Delta M = f(M_{pm}, M_{evm})$

$|\Delta M| < Mcrit$ → no → $|\Delta M| > Mfault$ → no → Calibrate Performance Model (Ageing)

↓ yes

Fault-Detection needed

Figure 6

$SH_{set}$

$T_{meas}$

First Performance Model

$P_2$

$P_1$

$T'_{pm} = f(N, T_1, P_1, P_2)$
$M'_{pm} = f(N, T_1, P_1, P_2)$

$T'_{pm}$

$\Delta T' = f(T'_{pm}, T_{meas})$

$M'_{pm}$

$SH_{set}$

Second Performance Model

$T_3$

$P_1$

$M'_{evm} = f(T_3, P_1, P_2, \varphi(\%))$

$M'_{evm}$

$\Delta M_{set} = f(M'_{pm}, M'_{evm})$

$\varphi(\%)$
EXV
Opening
Decision

$P_2$

**Figure 7a**

First Performance Model

$I'_{pm} = f(N, P_1, P_2, \omega)$

$I'_{pm}$

$\Delta I_{set} = f(I'_{pm}, I_{meas})$

$I_{meas}$

$SH_{set}$

**Figure 7b**

$T2_{set}$

$P_2$

$P_1$

First Performance Model

$T'_{pm} = f(N, T_1, P_1, P_2)$
$M'_{pm} = f(N, T_1, P_1, P_2)$

$T2_{set}$

$T_3$

$P_1$

$P_2$

Second Performance Model

$M'_{evm} = f(T_3, P_1, P_2, \varphi(\%))$

$T_{meas}$

$T'_{pm}$

$\Delta T' = f(T'_{pm}, T_{meas})$

$M'_{pm}$

$\Delta M_{set} = f(M'_{pm}, M'_{evm})$

$M'_{evm}$

$\varphi(\%)$
EXV
Opening
Decision

**Figure 8a**

First Performance Model

$I'_{pm} = f(N, P_1, P_2, \omega)$

$T2_{set}$

$I'_{pm}$

$I_{meas}$

$\Delta I_{set} = f(I'_{pm}, I_{meas})$

**Figure 8b**

**Figure 9**

First Performance Model

$P_{pm} = f(N, T_1, P_1, P_2)$
$M_{pm} = f(N, T_1, P_1, P_2)$

$T_1$ → 
$P_1$ → 
$P_2$ → 

→ $EER_{pm}$
→ $COP_{pm}$

**Figure 10**

First Performance Model
$M_{pm}[1...x] = f(N, T_1, P_1, P_2)$

Second Performance Model
$M_{evm} = f(T_3, P_1, P_2, \varphi(\%))$

$T_1$ → 
$P_1$ → 
$P_2$ → 
→ $M_{pm}[1...x]$

$T_3$ → 
$P_1$ → 
$P_2$ → 
$\varphi(\%)$ → 
→ $M_{evm}$

$M_{pm}[1...x] \approx M_{Evm}$ — yes → Present Operational Mode Detected

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0217558 B1
- US 6799951 B2
- US 6981384 B2
- US 20050126190 A1
- EP 0883047 B1
- US 20130205815 A1
- US 6701725 B2
- US 8775123 B2
- US 5506768 A
- WO 2008147828 A

- US 4878355 A
- EP 0237822 B1
- WO 2009048466 A1
- US 6318101 B1
- US 7509817 B1
- US 6711911 B1
- US 8096141 B2
- US 7290402 B1
- US 20130174591 A1
- WO 2008100255 A